# FASCICULE DE BREVET EUROPEEN

(11) **EP 2 158 071 B1**
(45) Date de publication et mention de la délivrance du brevet: **09.07.2014**
(21) Numéro de dépôt: 08805834.2
(22) Date de dépôt: 22.05.2008
(51) Int. Cl.: B23D 45/10, B27M 3/04, E04F 15/04, E04F 15/16

(54) **PROCEDE ET DISPOSITIF DE REALISATION D'UNE DALLE EN BLOCHETS DE BOIS DE BOUT**
VERFAHREN UND VORRICHTUNG ZUR HERSTELLUNG EINES BODENBELAGS AUS STIRNHOLZBLÖCKEN
METHOD AND DEVICE FOR PRODUCING A FLOOR MADE OF END-GRAIN WOOD BLOCKS

(30) Priorité: 22.05.2007 FR 0755193; 02.10.2007 US 976846 P
(43) Date de publication de la demande: 03.03.2010
(73) Titulaire: S.c. Des Paves Du Moulin Neuf, 16220 Montbron (FR)
(72) Inventeur: JOORIS, Thierry, B-1040 Bruxelles (BE); GAUDARD, François, F-92120 Montrouge (FR)
(74) Mandataire: Cenatiempo, Julie Adeline Anne
(86) Numéro de dépôt international: PCT/FR2008/050890
(87) Numéro de publication internationale: WO 2008/149034

(56) Documents cités:
- WO-A-84/03321
- FR-A- 1 117 506
- FR-A- 1 321 924
- US-A- 3 118 804

## Description

La présente invention concerne un procédé et un dispositif de réalisation d'une dalle composée de blochets de bois de bout. Cette dalle est destinée à être juxtaposée à d'autres en vue de réaliser un revêtement de sol.

Le bois de bout est issu de pièces de bois découpées transversalement par rapport à la fibre contrairement à ce qui se fait habituellement pour le débit d'une grume. En effet, pour bénéficier de pièces d'une grande longueur, la grume est débitée longitudinalement, dans le sens de la fibre.

Une grande partie de la production forestière n'est pas valorisée à savoir les arbres de petite section car il est impossible d'en tirer des pièces de bois de dimensions suffisantes.

Les propriétaires de ces plantations ont deux solutions, la première étant d'attendre que" arbre grossisse, ce qui veut dire généralement plusieurs dizaines d'années d'attente et la seconde étant une utilisation faiblement valorisée en bois de chauffage ou pour la fabrication de pâte à papier.

Par contre, dans de telles pièces de bois, il est tout à fait possible de réaliser des blochets c'est-à-dire des pièces de bois de bout de quelques millimètres de hauteur et de quelques centimètres de côté lorsque les blochets sont carrés ou rectangulaires pour donner un exemple.

On connaît le brevet européen EP 0.139.660 qui décrit un procédé pour confectionner un parquet à partir de blocs de bois de bout.

Ce brevet indique une réalisation de dalles avec une superposition d'un support en mousse compressible formant une couche d'amortissement, d'une trame indéchirable, d'une couche de colle noyant la trame et permettant de fixer définitivement les blocs de bois sur la mousse tramée.

Ceci permet de répondre à un problème de dilation verticale et autorise un déplacement vertical des blocs les uns par rapport aux autres dans les limites de déformation de la couche d'amortissement.

Afin de combler les espaces entre les blocs de bois, il est disposé une pâte translucide.

La présente invention prévoit un procédé différent car la problématique est tout à fait différente.

Ainsi, la présente invention considère que le bois de bout présente de grandes qualités de dureté et donc de résistance à l'usure et à l'abrasion, permet des effets esthétiques très nombreux. Le bois de bout peut être issu de pièces de bois de petites dimensions comme indiqué précédemment.

De cette façon de débiter le bois transversalement par rapport au fil, on en déduit au contraire que la dilatation verticale d'une pièce de bois de bout, si elle existe bien, est par contre sensiblement la même d'une pièce de bois de bout à l'autre. Cette variation en hauteur, en plus d'être extrêmement réduite, n'est pas un problème puisque les pièces de bois de bout peuvent se dilater librement en hauteur. Le problème eut été une forte dilatation différentielle, inacceptable pour l'obtention d'une surface plane.

De plus, la dilatation verticale est très inférieure au gonflement ou au rétreint horizontal et surtout les variations horizontales doivent être absorbées car le revêtement de sol est contraint par les murs. Il faut que les blocs de bois puissent se déplacer latéralement, sur des distances minimes certes, mais ces blocs ne peuvent pas être solidarisés de façon rigide sous peine d'engendrer localement des défauts de planéité importants.

Un autre paramètre important à prendre en compte est le séchage du bois à partir duquel sont réalisés les blocs de bois.

La solution habituelle consiste à partir de bois séché, ce qui a nécessité un stockage sur parc et/ou qui a subi un long passage en étuve car les pièces de bois sont généralement de dimensions importantes limitant la migration de l'eau à la surface des pièces de bois.

De fait, le coût important nuit à la diffusion de ce type de produit en bois de bout.

Dans l'art antérieur, les blocs de bois sont espacés entre eux et il faut combler avec un matériau de remplissage adapté. En effet, les blocs étant solidarisés au support, ils ne peuvent pas cumuler les dilatations et les reporter en périphérie du revêtement de sol.

Le procédé selon l'invention permet de produire des dalles composées de blochets de bois de bout, destinées à former un revêtement de sol qui pallie les problèmes de dilatation dans le sens horizontal, qui peut être produit de façon industrielle et qui offre des avantages lors de la pose.

Le dispositif associé pour la production de blochets de bois de bout est également décrit.

La description qui va suivre est établie en regard des dessins annexés qui représentent:
- figure 1 : une vue d'une dalle réalisée avec des blochets bois de bout selon l'invention,
- figure 2 : une vue en élévation latérale du dispositif de préparation des blochets, et
- figure 3 : une vue de face du dispositif de la figure 2.

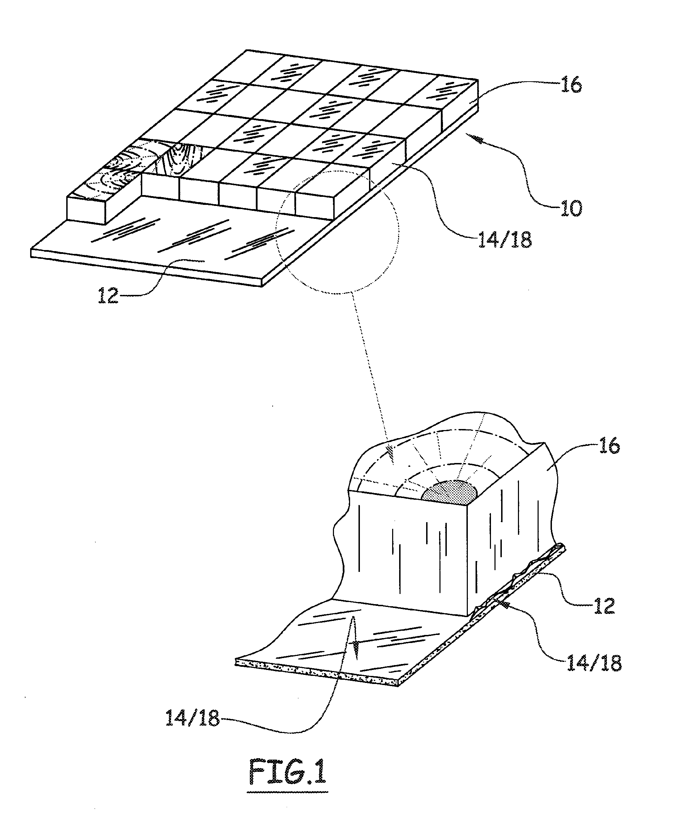

Sur la figure 1, la dalle 10 comprend un support 12, une interface 14 adhésive et des blochets 16 de bois de bout rapportés sur ladite interface.

Le support 12 est avantageusement une mousse de forte densité pour limiter la compressibilité donc pour limiter les déplacements verticaux. Cette mousse doit néanmoins conserver une souplesse pour faciliter la mise en place des dalles pour la réalisation d'un revêtement de sol complet.

Le rôle de cette mousse est une isolation phonique mais surtout cette mousse permet de supporter, de maintenir et de positionner les blochets.

L'interface 14 comporte une couche d'un adhésif 18 repositionnable. Un tel adhésif adhère à la surface supérieure du support 12 et reçoit les blochets 16. Ces blochets peuvent être plaqués sur l'adhésif et se trouvent solidarisés audit support mais ils peuvent être retirés sans endommager l'adhésif et sans lui faire perdre ses capacités adhésives, ce qui est le propre d'un adhésif repositionnable. Le recours à ce type d'adhésif est important car il permet aussi de retirer un blochet pour en permettre la découpe par exemple notamment en bord de revêtement.

Les blochets sont disposés parfaitement juxtaposés sans espace destiné à permettre une dilatation et sans espace destiné à recevoir un matériau de jointoiement.

Les blochets se dilatent et la dilatation horizontale est reportée sur les bords libres du revêtement de sol, en périphérie.

De façon connue, la pièce recevant le revêtement de sol comprend des moyens de compensation de la dilatation horizontale en périphérie, du type élastomère compressible, interposé entre le mur et le revêtement.

Une des solutions consiste aussi à mettre en oeuvre le procédé selon l'invention qui conduit à l'obtention de blochets ayant des dilatations limitées qui autorisent ainsi une pose juxtaposée.

Le procédé consiste à préparer des carrelets de bois ayant des dimensions de 0,30m à 1,5m pour disposer d'une grande rectitude. La section retenue est carrée avec des côtés de 80mm pour donner un ordre d'idées.

Ce carrelet selon le procédé est débité par sciage transversal.

Les blochets obtenus après sciage sont ensuite séchés, par tout moyen adapté et notamment en étuve.

Cette étape particulière du procédé permet de sécher les blochets dans des conditions satisfaisantes.

En effet, la migration de l'eau est beaucoup plus rapide, beaucoup plus homogène, s'effectue avec des gradients limités du fait des dimensions réduites des blochets.

De plus, les éventuelles déformations sont extrêmement limitées car la longueur des fibres est très courte, puisque la longueur des fibres correspond à l'épaisseur du blochet. Le relâchement des contraintes s'effectue sans problème.

Un autre avantage important concerne la qualité d'homogénéité des blochets puisqu'ils sont tous de mêmes dimensions, issus de la même essence de bois.

Le réglage des paramètres de séchage peut être optimisé puisque tous les blochets ont strictement les mêmes dimensions.

Dans tous les cas ces déformations sont parfaitement compatibles avec la précision dimensionnelle nécessaire pour un revêtement de sol sachant qu'elles pourront être éliminées lors d' un ponçage final après pose, si nécessaire.

Lors d'une utilisation de carrelets débités dans du bois déjà séché à coeur, il faut recourir à du bois ayant généralement subi un séchage poussé jusqu' à un taux d'hygrométrie de 10%. Pour cela, il faut des durées de séchage très longues. La durée doit être longue pour faire migrer l'eau sans engendrer trop de contraintes différentielles dans le bois mais elle doit être suffisamment courte pour que l'opération ne soit pas trop coûteuse.

Du fait de ce compromis nécessaire, du fait de la disparité des dimensions des pièces de bois généralement séchées simultanément, il subsiste des contraintes dans le bois.

C'est à partir de telles pièces de bois de différentes longueurs que sont découpés des carrelets eux-mêmes de différentes longueurs.

Or, on a constaté que les contraintes de séchage du bois subsistent dans le carrelet et se relâchent souvent après découpe des blochets engendrant des déformations non acceptables.

Le fait de recourir à du bois séché à coeur n'est pas la solution sans compter les pertes constituées par la sciure et par les chutes qui ont été des volumes de bois séchés inutilement.

On sait aussi qu'il y a des défauts dans le bois et certains blochets découpés sont inacceptables. Ces blochets mis au rebut sont aussi du bois séché à coeur inutilement de même que les blochets dont les déformations sont trop importantes.

Le procédé selon l'invention qui consiste à utiliser du bois brut permet aussi de façon avantageuse de ne sécher que le volume de bois strictement utile, sans sécher inutilement le volume de bois correspondant aux chutes lors du débit des pièces de bois pour l'obtention des carrelets, à la sciure de coupe des blochets, aux chutes issues du débit des carrelets et aux blochets rejetés comme non conformes.

Le procédé selon l'invention permet de vaincre un préjugé et diminue ainsi fortement les coûts d'obtention des blochets en plus d'en améliorer la qualité au moins en ce qui concerne la qualité du respect dimensionnel et l' homogénéité de réalisation.

Une autre solution consiste à recourir à des carrelets débités dans des pièces de bois de plus petites dimensions, sous multiples dimensionnels d'un blochet. Ainsi un blochet de 80 mm de côté comprend quatre pièces de 20 mm par 80 mm pour la même hauteur, nécessairement. Les pièces découpées sont séchées puis ces pièces sont assemblées par collage comme du lamellé collé.

Ces carrelets sont alors très stables dimensionnellement et les pièces de bois sont de sections encore plus petites unitairement ce qui améliore encore le séchage et le relâchement des contraintes mais modifie l'aspect esthétique final.

Il subsiste ensuite les contraintes d'une découpe de qualité des carrelets pour mettre en oeuvre ce procédé et obtenir des blochets adaptés.

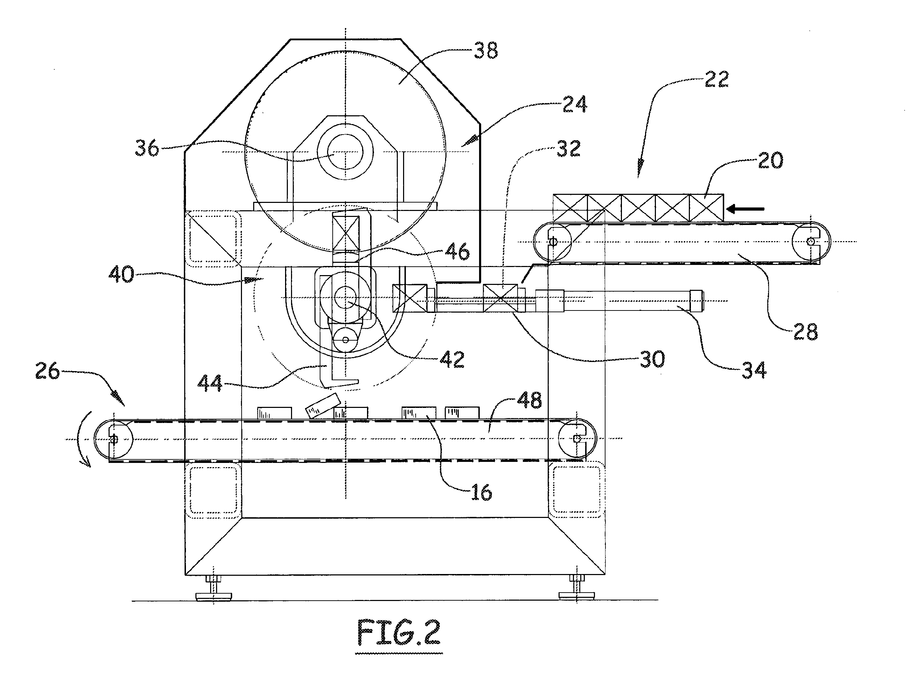

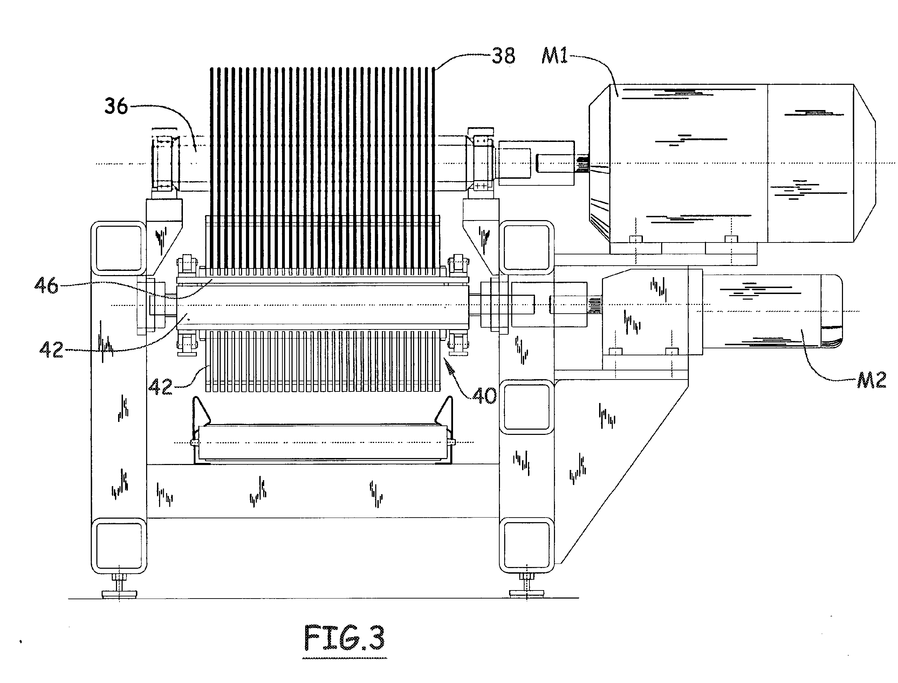

C'est l'objet du dispositif qui est maintenant décrit en regard des figures 2 et 3.

Les carrelets 20 de section identique ont des longueurs différentes fonction des pièces de bois dont ils sont issus. Ces carrelets sont positionnés à l'entrée du dispositif.

Le dispositif de découpe de blochets selon l' invention, comprend un poste 22 d'alimentation un poste 24 de découpe par sciage et un poste 26 d'évacuation. Le poste 22 d'alimentation comprend un convoyeur 28 supportant les carrelets 20.

Ce convoyeur 28 alimente un plateau 30 de positionnement. Ce plateau comporte un premier vérin 32 de calage, perpendiculaire au sens d'alimentation pour mettre le carrelet en butée par une de ses extrémités, non visible sur les figures.

Le plateau 30 de positionnement comprend un vérin 34 pousseur qui poursuit le déplacement du carrelet 20 ainsi positionné en butée vers le poste 24 de découpe par sciage. Ce plateau est découpé à son extrémité pour constituer un peigne.

Ce poste 24 de découpe par sciage comprend un arbre 36, entraîné par un moteur M1, portant une succession de disques 38 tranchants. Les disques 38 sont espacés par des entretoises par exemple, de façon à obtenir entre deux disques successifs un espace égal à l'épaisseur déterminée pour les blochets, ceci de façon précise.

L'épaisseur des disques se traduit par la production de sciure, comme dans toute opération de sciage. Cette épaisseur doit être limitée pour réduire les pertes mais suffisante pour conserver les disques rigides et éviter les vibrations dans les conditions de sciage prévues.

De même, le profil de denture doit être adapté pour atteindre le meilleur compromis entre vitesse de coupe, attaque du bois sans éclat, fin de coupe sans éclat, limitation des échauffements pour ne pas dégrader la surface de coupe puisque cette surface est directement visible après la pose.

Afin d'obtenir une très grande précision de coupe et de limiter très fortement les éclats, il est prévu des moyens 40 de guidage de coupe. Ces moyens 40 de guidage comprennent un arbre 42 portant au moins une série de doigts 44, entraîné en rotation par un moteur M2.

Le moteur M2 est moins puissant que le moteur M1 puisqu'il presse seulement les carrelets comme expliqué tandis que M1 doit entraîner de nombreux disques coupants dont la vitesse doit rester quasiment constante à vide comme lors de la coupe.

Chaque extrémité de doigt a un profil destiné à coopérer avec celui d'un carrelet. En l' occurrence le profil est en L. Il est aussi prévu une butée 46, de forme courbe par exemple un barreau de façon à maintenir le carrelet dans le profil en L durant la coupe.

Les doigts ont une largeur et une disposition telles qu'ils peuvent passer entre les disques. Les doigts sont prévus pour amener chaque carrelet à la coupe par les disques sur toute sa section.

De façon préférentielle, il est prévu deux séries de doigts disposées à 180°.

Les deux arbres 36 et 42 sont alignés verticalement.

En partie inférieure du dispositif, il est prévu des moyens 26 d'évacuation avec un convoyeur 48 destiné à recueillir les blochets ainsi venus de coupe.

Le dispositif fonctionne de la façon suivante :

Les carrelets 20 sont approvisionnés par le convoyeur 28. Un carrelet translaté tombe sur le plateau 30, ce carrelet est mis en butée par le vérin 32 puis poussé vers le poste 24 de découpe par le vérin 34.

L'arbre 36 est entraîné en continu par le moteur M1 à la vitesse de coupe adaptée.

Lorsque le carrelet 20 est en place sur le plateau 30, le moteur M2 en rotation lente déplace une série de doigts 44 qui viennent cueillir le carrelet, le soulèvent et le déplacent à travers les disques 38 pour obtenir une découpe sur toute la section.

La qualité de cette découpe est améliorée encore par le fait que le carrelet 20 décrit une trajectoire curviligne.

Les blochets 16 ainsi découpés chutent sur le convoyeur 48.

Ces blochets 16 sont ainsi prêts pour être séchés.

Ces blochets, une fois séchés, peuvent être utilisés pour réaliser des dalles 10.

## Revendications

1. Procédé de réalisation d'une dalle composée de blochets de bois de bout, **caractérisé en ce qu'**il comprend les étapes suivantes:
- préparer des blochets (16) de bois de bout, par découpe transversale par sciage d'un carrelet (20),
- préparer un support (12) de forte densité pour limiter la compressibilité,
- préparer une interface (14) adhésive avec une couche d'un adhésif (18) repositionnable,
- disposer les blochets (16) sur cette interface (14).

2. Procédé de réalisation d'une dalle selon la revendication 1, **caractérisé en ce que** le support (12) est une mousse de forte densité pour limiter la compressibilité et pour limiter les déplacements verticaux.

3. Dispositif de réalisation de blochets pour la mise en oeuvre du procédé selon la revendication 1 et 2, comprenant un poste (22) d'alimentation en carrelets (20), un poste (24) de découpe par sciage multiple comprenant un arbre (36) motorisé avec un arbre comportant une succession de disques (38) tranchants et avec des moyens (40) de guidage de coupe comprenant un arbre (42) entraîné en rotation par un moteur M2, ledit arbre (42) portant au moins une série de doigts (44) ayant un profil destiné à coopérer avec celui d'un carrelet et aptes à passer entre les disques, ainsi qu'un poste (26) d'évacuation.

4. Dispositif de réalisation de blochets selon la revendication 3, **caractérisé en ce que** le poste (22) d'alimentation comprend un convoyeur (28) supportant les carrelets de façon à alimenter un plateau (30) de positionnement, un premier vérin (32) de calage, perpendiculaire au sens d'alimentation pour mettre le carrelet en butée par une de ses extrémités et un vérin (34) pousseur pour déplacer le carrelet (20) ainsi positionné en butée vers le poste (24) de découpe par sciage.

5. Dispositif de réalisation de brochets selon la revendication 3 ou 4, **caractérisé en ce que** les disques (38) sont espacés de façon à obtenir entre deux disques successifs un espace égal à l'épaisseur d'un blochet, les doigts (44) pressant les carrelets sur lesdits disques (38).

6. Dispositif de réalisation de blochets selon les revendications 3 et 5, **caractérisé en ce que** les arbres (36) et (42) du poste (24) de découpe par sciage et des moyens (40) de guidage sont alignés.

## Patentansprüche

1. Verfahren zur Herstellung eines Bodenbelags aus Stirnholzblöcken, **dadurch gekennzeichnet, dass** dieses die folgenden Verfahrensschritte aufweist:
- Bereitstellen von Stirnholzblöcken (16) durch ein quergerichtetes Abteilen durch Sägen eines Vierkantholzes (20),
- Bereitstellen einer Unterlage (12) hoher Dichte, um die Verdichtbarkeit zu begrenzen,
- Bereitstellen einer adhäsiven Schnittstelle (14) mit einer Schicht aus einem repositionierbaren Kleber (18),
- Anordnen der Blöcke (16) auf der Schnittstelle (14).

2. Verfahren zur Herstellung eines Bodenbelags nach Anspruch 1, **dadurch gekennzeichnet, dass** die Unterlage (12) ein Schaumstoff hoher Dichte ist, um die Verdichtbarkeit und die vertikalen Verschiebungen zu begrenzen.

3. Vorrichtung zur Herstellung von Blöcken für die Ausführung eines Verfahrens nach Anspruch 1 oder 2, mit einer Zuführung (22) für die Vierkanthölzer (20), mit einer Einrichtung (24) zum Abteilen durch mehrfaches Sägen, die eine angetriebene Welle (36) mit einer Welle aufweist, die mit einer Folge von Trennscheiben (38) versehen ist, und mit Mitteln (40) zum Führen des Schnittes, die eine Welle (42) umfassen, die durch einen Motor M2 in Drehung versetzt wird, wobei die Welle (42) mit wenigstens einer Reihe von Fingern (44) versehen ist, die ein Profil aufweisen, das dazu bestimmt ist, mit demjenigen eines Vierkantholzes zusammenzuwirken, und dazu eingerichtet sind, zwischen den Scheiben hindurchzutreten, ebenso wie mit einer Entleereinrichtung (26).

4. Vorrichtung für die Herstellung von Blöcken nach Anspruch 3, **dadurch gekennzeichnet, dass** die Zuführung (22) ein Förderband (28) umfasst, das die Vierkanthölzer hält, um eine Positionierebene (30) zu versorgen, und eine im rechten Winkel zur Zufuhrrichtung ausgerichtete erste Winde (32), um das Vierkantholz mit einem ihrer Enden zur Anlage zu bringen, und eine Schubwinde (34), um das so ausgerichtete Vierkantholz (20) mit der Einrichtung (24) zum Abteilen durch Sägen zur Anlage zu bringen.

5. Vorrichtung für die Herstellung von Blöcken nach Anspruch 3 oder 4, **dadurch gekennzeichnet, dass** die Scheiben (38) derart beabstandet sind, dass zwischen zwei aufeinanderfolgenden Scheiben ein Zwischenraum vorhanden ist, der gleich der Dicke eines Blocks ist, wobei die Finger (44) die Vierkanthölzer gegen die Scheiben (38) pressen.

6. Vorrichtung für die Herstellung von Blöcken nach Anspruch 3 und 5, **dadurch gekennzeichnet, dass** die Wellen (36) und (42) der Einrichtung (24) zum Abteilen durch Sägen und die Mittel (40) zum Führen aufeinander ausgerichtet sind.

## Claims

1. A method for producing a floor composed of end-grain wood blocks, **characterised in that** it comprises the following steps:
- preparing end-grain wood blocks (16), by transverse cutting by sawing a slab (20),
- preparing a high-density support (12) for limiting compressibility,
- preparing an adhesive interface (14) with a layer of a repositionable adhesive (18),
- arranging the blocks (16) on this interface (14).

2. A method for producing a floor according to claim 1, **characterised in that** the support (12) is a high-density foam for limiting compressibility and limiting vertical movements.

3. A device for producing blocks for implementing the method according to claims 1 and 2, comprising a station (22) for feeding slabs (20), a station (24) for cutting by multiple sawing comprising a motorised shaft (36) with a shaft comprising a succession of cutting discs (38) and with cut-guidance means (40) comprising a shaft (42) rotated by a motor M2, said shaft (42) carrying at least one series of fingers (44) having a profile intended to cooperate with the profile of a slab and able to pass between the discs, as well as a discharge station (26).

4. A device for producing blocks according to claim 3, **characterised in that** the feed station (22) comprises a conveyor (28) supporting the slabs so as to supply a positioning plate (30), a first adjustment ram (32), perpendicular to the feed direction, in order to put the slab in abutment through one of its ends, and a pusher ram (34) for moving the slab (20) thus positioned in abutment towards the station (24) for cutting by sawing.

5. A device for producing blocks according to claim 3 or 4, **characterised in that** the discs (38) are spaced so as to obtain, between two successive discs, a space equal to the thickness of one block, the fingers (44) pressing the slabs onto said discs (38).

6. A device for producing blocks according to claims 3 and 5, **characterised in that** the shafts (36) and (42) of the station (24) for cutting by sawing and of the guidance means (40) are aligned.
